## Europäisches Patentamt
## European Patent Office
## Office européen des brevets

(11) Numéro de publication: **0 327 443**
**A1**

# DEMANDE DE BREVET EUROPEEN

(21) Numéro de dépôt: **89400262.5**

(22) Date de dépôt: **31.01.89**

(51) Int. Cl.4: **F 28 F 9/06**
**F 16 L 37/08**

(30) Priorité: **02.02.88 FR 8801189**

(43) Date de publication de la demande:
**09.08.89 Bulletin 89/32**

(84) Etats contractants désignés:
**BE DE ES GB IT LU NL SE**

(71) Demandeur: **HUTCHINSON**
**2 rue Balzac**
**F-75008 Paris (FR)**

(72) Inventeur: **Briet, Gilles**
**Le Petit Vallot Neuvy Grandchamp**
**F-71130 Gueugnon (FR)**

(74) Mandataire: **Ores, Irène et al**
**CABINET ORES 6, Avenue de Messine**
**F-75008 Paris (FR)**

(54) **Dispositif d'assemblage pour un ensemble échangeur de chaleur/raccord tubulaire.**

(57) Dispositif d'assemblage pour un ensemble échangeur de chaleur/raccord tubulaire, dans lequel le raccord tubulaire (5), débouchant dans une tubulure (4) d'une boîte à eau (3) de l'échangeur, est solidarisé d'une part à un tuyau souple (6) par une liaison fixe et d'autre part à la tubulure (4) par une liaison élastique facilement démontable.

Cette dernière est constituée par un dispositif de verrouillage comportant deux pattes (19) diamétralement opposées, portées par une bague (18) fixée à l'intérieur de la boîte à eau (3) et coaxiale avec la tubulure (4), lesquelles pattes (19) sont dirigées vers l'axe de celle-ci et sont élastiques dans la direction radiale, deux encoches (22) étant ménagées sur l'extrémité (7) du raccord tubulaire (5), pour recevoir les pattes élastiques (19) de verrouillage par encliquetage, lorsque le raccord tubulaire (5) est assemblé avec la tubulure (4).

Application à la réalisation de raccords rapides notamment dans le domaine de l'industrie automobile.

FIG. 1

## Description

## DISPOSITIF D'ASSEMBLAGE POUR UN ENSEMBLE ECHANGEUR DE CHALEUR/RACCORD TUBULAIRE.

La présente invention, à laquelle a participé la Société **VALEO**, est relative à un dispositif d'assemblage pour un ensemble échangeur de chaleur/raccord tubulaire, dans lequel le raccord tubulaire débouche dans une tubulure d'une boîte à eau de l'échangeur à laquelle il est fixé par une liaison élastique facilement démontable.

Il s'agit d'un dispositif permettant d'effectuer un montage et un démontage rapides, qui se différencie par rapport aux dispositifs antérieurs du même type, déjà proposés, en ce que la conception du système de verrouillage/déverrouillage a pour but de rendre particulièrement simple et peu coûteux le dispositif d'assemblage par rapport aux solutions complexes de l'Art antérieur basées soit sur l'emploi de plusieurs pièces soit sur une configuration compliquée du raccord tubulaire et de la tubulure intervenant dans la réalisation de l'assemblage.

La présente invention a pour objet un dispositif d'assemblage pour un ensemble échangeur de chaleur/raccord tubulaire, dans lequel le raccord tubulaire, débouchant dans une tubulure d'une boîte à eau de l'échangeur, est solidarisé d'une part à un tuyau souple par une liaison fixe et, d'autre part, à la tubulure par une liaison élastique facilement démontable, l'étanchéité entre le raccord tubulaire et la tubulure étant assurée par une bague élastomère comprimée radialement entre eux, lequel dispositif d'assemblage est caractérisé en ce que la liaison élastique précitée est constituée par un dispositif de verrouillage comportant deux pattes, notamment métalliques, diamétralement opposées, portées par une bague également métallique fixée à l'intérieur de la boîte à eau et coaxiale avec la tubulure, lesquelles pattes sont dirigées vers l'axe de celle-ci et sont élastiques dans la direction radiale, et en ce que deux encoches sont ménagées sur l'extrémité du raccord tubulaire , lesquelles encoches sont destinées à recevoir les pattes élastiques de verrouillage par encliquetage, lorsque le raccord tubulaire est assemblé avec la tubulure.

Selon un mode de réalisation avantageux du dispositif d'assemblage conforme à l'invention, la bague métallique est logée en partie dans une gorge ménagée dans une portion de la paroi interne de la boîte à eau, à partir de laquelle fait saillie la tubulure, et vient en appui à force sur un bossage, qui est aligné radialement avec la gorge précitée et qui est disposé dans une position opposée et symétrique par rapport à l'emplacement de cette gorge.

Selon un autre mode de réalisation avantageux du dispositif d'assemblage conforme à l'invention, l'extrémité du raccord tubulaire est ajourée sur une portion périphérique comprise entre les emplacements desdites encoches et sur une longueur axiale légèrement supérieure à la largeur de ces encoches.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés dans lesquels :

- la figure 1 montre la tubulure d'une boîte à eau d'échangeur de chaleur et un raccord tubulaire désassemblés, le dispositif de verrouillage élastique selon l'invention étant en place à l'intérieur de la tubulure,

- la figure 2 montre en coupe, suivant II, la tubulure et le raccord tubulaire de la figure 1 assemblés.

Il doit être bien entendu, toutefois, que ces dessins et les parties descriptives correspondantes, sont donnés uniquement à titre d'illustration de l'objet de l'invention, dont ils ne constituent en aucune manière une limitation.

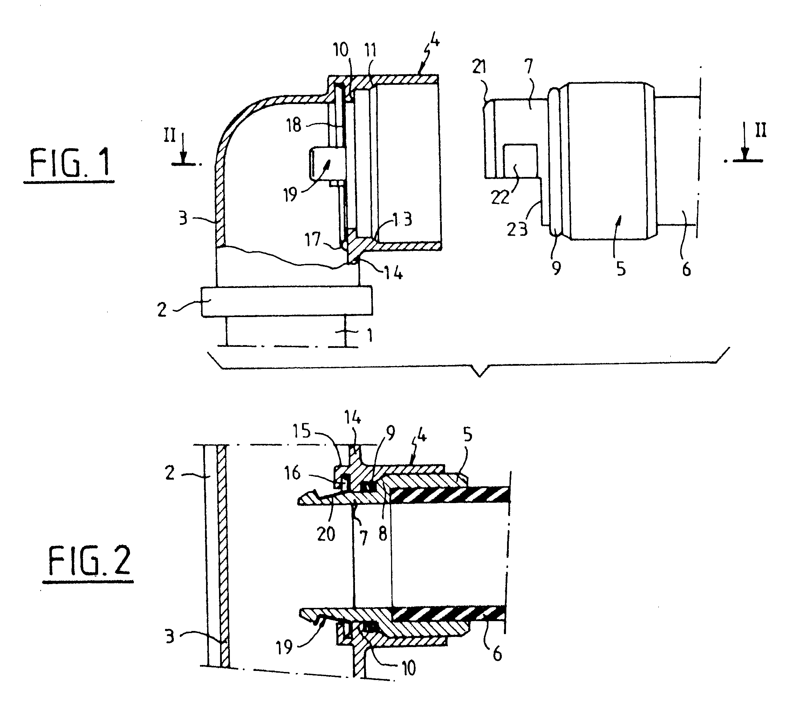

Le système de faisceaux et tubes d'un échangeur de chaleur est indiqué schématiquement à la figure 1 par la référence numérique 1.

La référence 2 représente le collecteur qui relie les tubes de l'échangeur à la boîte à eau 3, qui est pourvue d'une tubulure 4 destinée à permettre l'assemblage avec la boîte à eau d'un raccord tubulaire 5 en matière plastique appliqué sur un tuyau souple 6, notamment du type dit durit, à base d'élastomère.

L'extrémité 7 du raccord tubulaire 5 fait saillie à partir d'un épaulement annulaire 8, radialement rentrant, (cf. la figure 2),de façon à permettre l'emplacement d'une bague élastomère d'étanchéité 9, qui est disposée entre l'épaulement 8 et un épaulement annulaire 10, radialement saillant vers l'intérieur de la boîte à eau 3 et qui est comprimée radialement entre la tubulure et le raccord lorsque ceux-ci sont assemblés (cf. la figure 2). Cet épaulement 10 se trouve sur le prolongement de la paroi 14 de la boîte à eau 3, à partir de laquelle fait saillie la tubulure 4. Cette tubulure présente un deuxième épaulement 11 avec une surface d'approche oblique 13, contre laquelle s'applique une surface d'approche également oblique 12 de l'épaulement 8 du raccord tubulaire (cf. encore une fois la figure 2). Lors de l'assemblage, l'extrémité 7 du raccord tubulaire 5 glisse sur l'épaulement 10 de la tubulure 4.

L'épaulement 10 de la boîte à eau 3 présente un épaississement 15, axial par rapport à cette tubulure (cf. la figure 2), qui fait saillie vers l'intérieur de la boîte à eau et qui s'étend sur une demi-circonférence pouvant se prolonger légèrement par des portions tangentielles.

Dans cet épaississement de l'épaulement 10 est ménagée une gorge 16.

L'épaulement 10 présente aussi un bossage 17 (cf. la figure 1) faisant saillie, comme l'épaississement 15, vers l'intérieur de la boîte à eau, lequel bossage est aligné radialement avec l'épaississement précité et est situé de préférence symétriquement par rapport à celui-ci.

La fonction de la gorge 16 et du bossage 17 est décrite ci-après, en relation avec la description du dispositif de verrouillage selon l'invention.

Ce dispositif est constitué par une bague 18, de préférence métallique, qui comporte deux pattes 19, élastiques dans la direction radiale et inclinées vers l'axe de la tubulure, de façon telle que leur surface d'approche 20 interfère avec l'extrémité 7 du raccord tubulaire 5 (cette extrémité 7 présente une surface d'approche tronconique 21), qui écarte les deux pattes 19 radialement vers l'extérieur, lors de la pénétration de l'extrémité du raccord dans la tubulure.

Le maintien en position de la bague 18 est obtenu en montant celle-ci (préalablement à l'assemblage entre tubulure et raccord) dans la gorge 16 précitée, ménagée dans l'épaississement 15 de l'épaulement 10 de la tubulure, et en lui faisant prendre appui à force (par pression) sur le bossage de retenue 17, porté également par l'épaulement 10.

L'extrémité 7 du raccord tubulaire 5 comporte deux encoches 22, correspondant à l'emplacement des pattes 19 et présentant le même profil que ces dernières. L'extension périphérique de cette extrémité correspond à celle de l'épaississement 15 de l'épaulement 10, à savoir de la gorge 16, et est ajourée dans la portion restante 23. L'extension axiale de l'extrémité précitée est légèrement supérieure à celle des pattes de verrouillage 19.

Lorsque l'extrémité 7 est introduite dans la tubulure 4, elle écarte radialement vers l'extérieur les pattes 19 par la poussée exercée par sa surface d'approche 21, ces pattes venant se loger dans les encoches 22 du raccord dès que celui-ci est complètement assemblé avec la tubulure.

Pour déverrouiller l'assemblage, il suffit de tourner le raccord tubulaire 5 jusqu'à dégager les pattes élastiques de verrouillage 19 de leur siège, à savoir des encoches 22.

Les manoeuvres de verrouillage et déverrouillage peuvent être indiquées par l'emplacement de repères appropriés sur la tubulure et le raccord, comme décrit dans des Demandes de Brevets déposées le même jour par la Demanderesse et ayant trait à des dispositifs d'assemblage du même type.

Ainsi que cela ressort de ce qui précède, l'invention ne se limite nullement à ceux de ses modes de réalisation et d'application qui viennent d'être décrits de façon plus explicite ; elle en embrasse, au contraire, toutes les variantes qui peuvent venir à l'esprit du technicien en la matière, sans s'écarter du cadre, ni de la portée, de la présente invention. En particulier, bien qu'on ait représenté la fixation entre le raccord tubulaire en matière plastique et le tuyau souple élastomère comme étant obtenue par adhérisation (surmoulage direct) du raccord sur le tuyau, il va de soi que la fixation peut être obtenue par emprisonnement de l'extrémité du tuyau entre le raccord et un surmoulage en matière plastique ou par sertissage d'une bague métallique appliquée autour du tuyau ou encore par simple collage ou par tout autre moyen équivalent.

## Revendications

1.- Dispositif d'assemblage pour un ensemble échangeur de chaleur/raccord tubulaire, dans lequel le raccord tubulaire (5), débouchant dans une tubulure (4) d'une boîte à eau (3) de l'échangeur, est solidarisé d'une part à un tuyau souple (6) par une liaison fixe et d'autre part à la tubulure (4) par une liaison élastique facilement démontable, l'étanchéité entre le raccord tubulaire (5) et la tubulure (4) étant assurée par une bague élastomère(9) interposée entre eux, lequel dispositif d'assemblage est caractérisé en ce que la liaison élastique précitée est constituée par un dispositif de verrouillage comportant deux pattes (19), notamment métalliques, diamétralement opposées, portées par une bague (18) également métallique fixée à l'intérieur de la boîte à eau (3) et coaxiale avec la tubulure (4), lesquelles pattes (19) sont dirigées vers l'axe de celle-ci et sont élastiques dans la direction radiale, et en ce que deux encoches (22) sont ménagées sur l'extrémité (7) du raccord tubulaire (5), lesquelles encoches (22) sont destinées à recevoir les pattes élastiques (19) de verrouillage par encliquetage, lorsque le raccord tubulaire(5) est assemblé avec la tubulure (4).

2.- Dispositif selon la revendication 1, caractérisé en ce que la bague métallique (18) est logée en partie dans une gorge (16) ménagée dans une portion (15) de la paroi interne de la boîte à eau (3), à partir de laquelle fait saillie la tubulure (4) et vient en appui à force sur un bossage (17), qui est aligné radialement avec la gorge précitée (16) et qui est disposé dans une position opposée et symétrique par rapport à l'emplacement de cette gorge.

3.- Dispositif selon l'une quelconque des revendication 1 ou 2, caractérisé en ce que l'extrémité (7) du raccord tubulaire est ajourée sur une portion périphérique (23) comprise entre les emplacements desdites encoches (22) et sur une longueur axiale légèrement supérieure à la largeur de ces encoches.

FIG.1

FIG.2

EP 0 327 443 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | FR-A-2 249 299   (BEHR) <br> * En entier * <br> --- | 1,2,3 | F 28 F    9/06 <br> F 16 L   37/08 |
| Y | EP-A-0 208 850   (THYSSEN) <br> * En entier * <br> --- | 1,2,3 | |
| A | US-A-3 245 703   (MANLY) <br> * En entier * <br> ----- | 1 | |

**DOMAINES TECHNIQUES RECHERCHES (Int. Cl.4)**

F 28 F
F 16 L

**Le présent rapport a été établi pour toutes les revendications**

| Lieu de la recherche | Date d'achèvement de la recherche | Examinateur |
|---|---|---|
| LA HAYE | 14-03-1989 | SMETS E.D.C. |